# FASCICULE DE BREVET EUROPEEN

(11) **EP 0 802 299 B1**
(45) Date de publication et mention de la délivrance du brevet: **05.07.2000**
(21) Numéro de dépôt: 97400784.1
(22) Date de dépôt: 04.04.1997
(51) Int. Cl.: E06B 3/98, E04B 1/58, F16B 7/04

(54) **Dispositif d'assemblage en équerre et de bridage entre deux profilés métalliques creux, disposés selon deux directions perpendiculaires**
Klemm- und Eckverbindungsvorrichtung zwischen zwei rechtwinklig zueinander stehende Metallhohlprofilen
Clamping and corner joining device between two perpendicular hollow metal section members

(30) Priorité: 18.04.1996 FR 9604882
(43) Date de publication de la demande: 22.10.1997
(73) Titulaire: TECHNAL, 31037 Toulouse Cedex (FR)
(72) Inventeur: Clauzet, Robert, 31120 Roquettes (FR); Saisset, Guy, 31810 Venerque (FR); Roz, Robert, 31770 Colomiers (FR)
(74) Mandataire: Desaix, Anne

(56) Documents cités:
- DE-A- 1 784 599
- DE-A- 1 918 471
- DE-A- 2 041 699
- FR-A- 1 460 477
- FR-A- 2 122 006

## Description

La présente invention est relative à un dispositif d'assemblage en équerre et de bridage par expansion, prévu notamment pour solidariser deux profilés métalliques creux, disposés selon deux directions respectivement perpendiculaires.

L'assemblage de profilés métalliques creux de forte section, est tout à fait fréquent pour la réalisation d'huisseries ou analogues, dans de très nombreuses structures de construction. Lorsque ces profilés sont soumis à de fortes sollicitations mécaniques, il est souvent indispensable de les brider mutuellement au moyen d'embouts en forme d'équerres qui sont solidarisés d'un des profilés et pénètrent dans l'extrémité de l'autre qui s'applique perpendiculairement contre la surface du précédent, afin d'assurer un montage fiable. Un exemple d'un tel assemblage est notamment décrit et représenté dans la demande de brevet français FR-A-2 727 167 au nom de la Société demanderesse.

Diverses autres solutions de ce problème ont déjà été prévues, qui de façon générale consistent à faire comporter à la partie de l'embout qui s'engage avec jeu à l'intérieur d'un des deux profilés, un organe à expansion, réalisant généralement le coulissement de deux pièces l'une contre l'autre selon des portées inclinées glissant l'une sur l'autre de manière à faire croître l'empattement de l'embout et à le bloquer progressivement contre les surfaces en regard du profilé. A titre d'exemple, on peut plus particulièrement se référer au brevet français FR-A-2 682 738, également au nom de la Société demanderesse.

Toutefois, il s'avère que les systèmes de ce genre connus jusqu'à présent ne sont pas adaptés lorsque les profilés sont soumis à des efforts notables et surtout lorsque, du fait des grandes sections de ces profilés, permettant d'assurer une résistance suffisante, les tolérances de fabrication sont notables, de telle sorte que l'expansion de l'embout de blocage n'est pas toujours suffisante pour assurer une parfaite fiabilité du montage.

De plus, si les embouts à expansion classiques permettent de rattraper le jeu disponible dans une direction, notamment latéralement, il ne sont généralement pas efficaces pour pallier les effets d'une variation des tolérances du profilé dans le sens de la hauteur, c'est-à-dire perpendiculairement à la direction précédente.

La présente invention a pour objet un dispositif d'assemblage qui répond mieux que ceux disponibles jusqu'à ce jour aux impératifs précités, en permettant un bridage sûr des deux profilés, notamment avec un rattrapage de jeu réalisé grâce à une déformation en force de l'embout, une fois ce bridage effectué.

A cet effet, le dispositif considéré, du type comportant un embout propre à être logé avec jeu dans le premier des deux profilés et appliqué contre la surface du second profilé pour être solidarisé de celui-ci, notamment au moyen d'une contre-plaque montée à l'intérieur de ce second profilé et d'au moins une vis de liaison avec cette contre-plaque, cet embout coopérant de plus avec un premier coulisseau, apte à glisser sur une surface inclinée de l'embout tout en étant solidarisé du premier profilé à l'aide d'une vis de serrage traversant librement un premier passage prévu dans l'embout, de telle sorte que la commande de cette vis provoque le déplacement relatif de cet embout vis-à-vis du premier profilé dans un sens qui assure le blocage des deux profilés l'un contre l'autre, se caractérise en ce que l'embout coopère également avec un second coulisseau, solidarisé du premier profilé par une autre vis de serrage traversant librement un second passage prévu dans l'embout, le déplacement relatif de celui-ci par rapport à ce second coulisseau provoquant la déformation progressive d'une aile de l'embout sur laquelle glisse ce coulisseau, rattrapant le jeu dû aux tolérances de montage, créé entre l'embout et le premier profilé.

Selon une caractéristique particulière, les deux vis de serrage, provoquant le déplacement relatif des deux coulisseaux par rapport à l'embout, sont opposées l'une à l'autre de part et d'autre du premier profilé.

Selon une autre caractéristique également, les deux coulisseaux sont montés dans des logements symétriques et opposés de l'embout. Avantageusement, chacun de ces coulisseaux est maintenu dans son logement par un joint, monté dans une rainure du coulisseau et en appui contre la surface en regard de l'embout.

Dans un mode de réalisation préféré du dispositif considéré, l'embout est solidarisé de la contre-plaque de liaison avec le second profilé au moyen de deux vis symétriques par rapport au plan médian du premier profilé, qui s'étendent perpendiculairement à la surface du second.

Avantageusement et dans ce même mode de réalisation, la contre-plaque est guidée dans le second profilé contre la surface d'appui de l'embout au moyen d'ergots en saillie, prévus dans ce second profilé.

Le dispositif selon l'invention permet avantageusement, par l'utilisation d'une deuxième vis de serrage, d'assurer un second point de rapprochement entre les deux profilés.

D'autres caractéristiques d'un dispositif d'assemblage en équerre de deux profilés métalliques, établi conformément à l'invention, apparaîtront encore à travers la description qui suit de plusieurs exemples de réalisation, donnés à titre indicatif et non limitatif, en référence aux dessins annexés sur lesquels :
- La Figure 1 est une vue en perspective éclatée, illustrant les différentes parties du dispositif selon l'invention, notamment l'embout, la contre-plaque, les deux coulisseaux, les vis de serrage et les deux profilés.

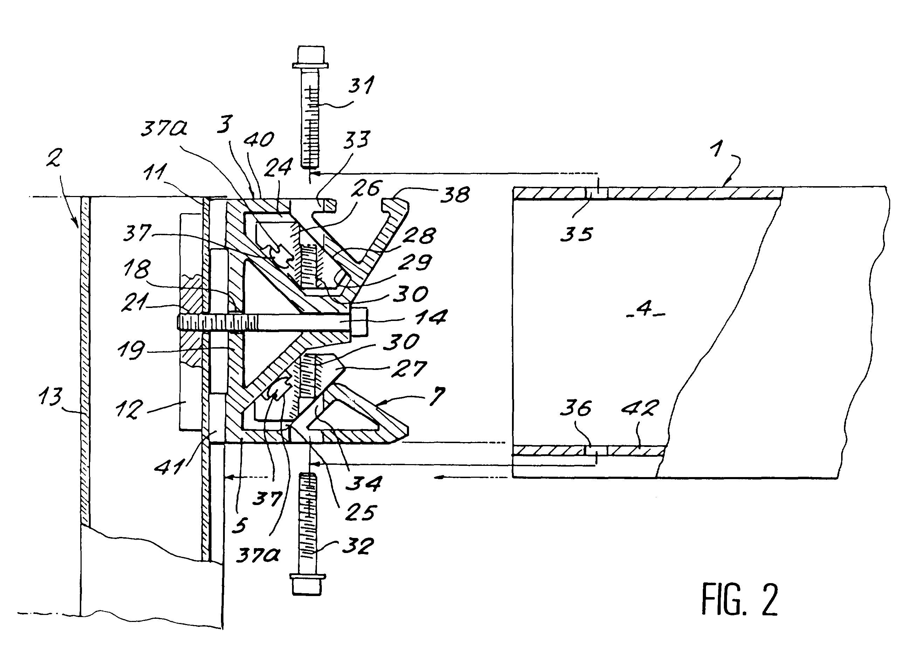

- La Figure 2 est une vue en coupe transversale montrant le positionnement de l'embout et de la contre-plaque vis-à-vis du second profilé, préalablement à l'engagement du premier profilé sur l'embout.
- La Figure 3 est une vue analogue à la Figure 2, mais dans laquelle le premier profilé est représenté appliqué contre le second.
- La Figure 4 est une vue en coupe de la Figure 3, selon la ligne IV-IV de celle-ci.

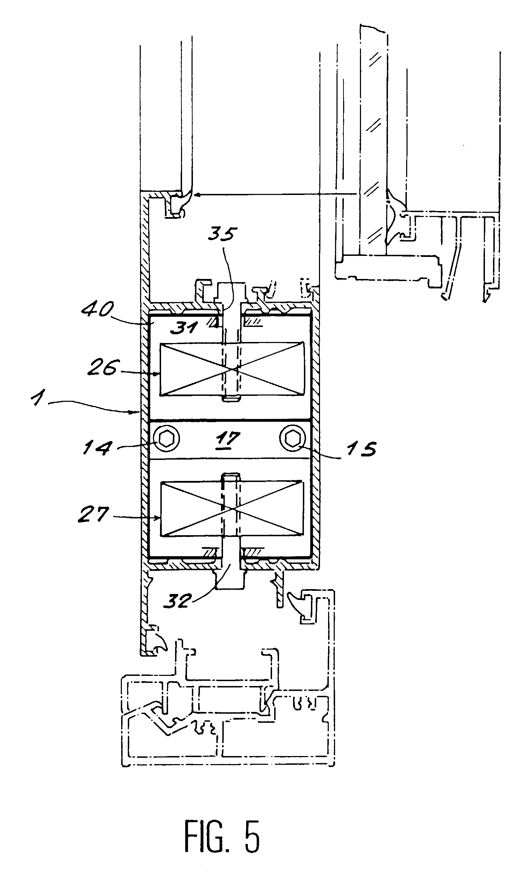

- La Figure 5 est une vue de côté de l'embout par l'intérieur du premier profilé.

Comme on le voit sur ces figures, le dispositif selon l'invention est prévu pour réaliser l'assemblage l'un contre l'autre et le bridage en position de deux profilés métalliques, respectivement 1 et 2, dont la structure générale n'importe pas directement à l'invention, sauf à préciser que ces profilés présentent des dimensions notables, et en particulier de fortes sections, de telle sorte que leur réalisation industrielle impose des tolérances et des jeux non négligeables qui peuvent poser problème pour obtenir une liaison fiable et robuste.

Dans l'exemple illustré sur les dessins, le profilé 1, désigné par convention dans ce qui suit sous le terme de premier profilé, est creux et s'étend horizontalement, le second profilé 2, également creux, étant disposé verticalement de manière à venir s'appliquer perpendiculairement contre le profilé 1.

Conformément à l'invention, l'assemblage des deux profilés 1 et 2 est réalisé au moyen d'un embout 3 de forme générale parallélépipédique et dont le profil, et en particulier la dimension en largeur, est déterminé de manière à pouvoir s'engager dans la partie creuse 4 du premier profilé.

L'embout 3 comporte un corps 5, qui présente en partie une symétrie par rapport à un plan horizontal passant au centre de cet embout, ce corps se prolongeant par deux ailes, respectivement 6 et 7, asymétriques l'une de l'autre et dont les rôles seront précisés ci-après.

Le corps 5 présente dans sa face en regard du second profilé 2 un lamage en creux 8, permettant de centrer l'embout par rapport à ce profilé, par l'engagement dans ce lamage de deux saillies, respectivement 9 et 10, prévues en relief dans la toile en regard 11 du profilé.

Ce corps 5 est par ailleurs rendu solidaire du second profilé 2 au moyen d'une contre-plaque 12, qui s'engage dans la partie creuse 13 de ce profilé et s'appuie contre la toile 11 à l'opposé de l'embout.

La contre-plaque 12 est en position appropriée, solidarisée du corps 5 au moyen de deux vis de blocage, respectivement 14 et 15, ces vis traversant des trous 16 prévus dans la partie centrale 17 du corps, d'autres trous en regard 18 dans la face avant 19 du corps qui vient s'appuyer sur le second profilé 2, et des passages 20 dans la toile 11 de celui-ci, pour venir enfin se visser par leurs extrémités dans des alésages taraudés 21 de la contre-plaque 12.

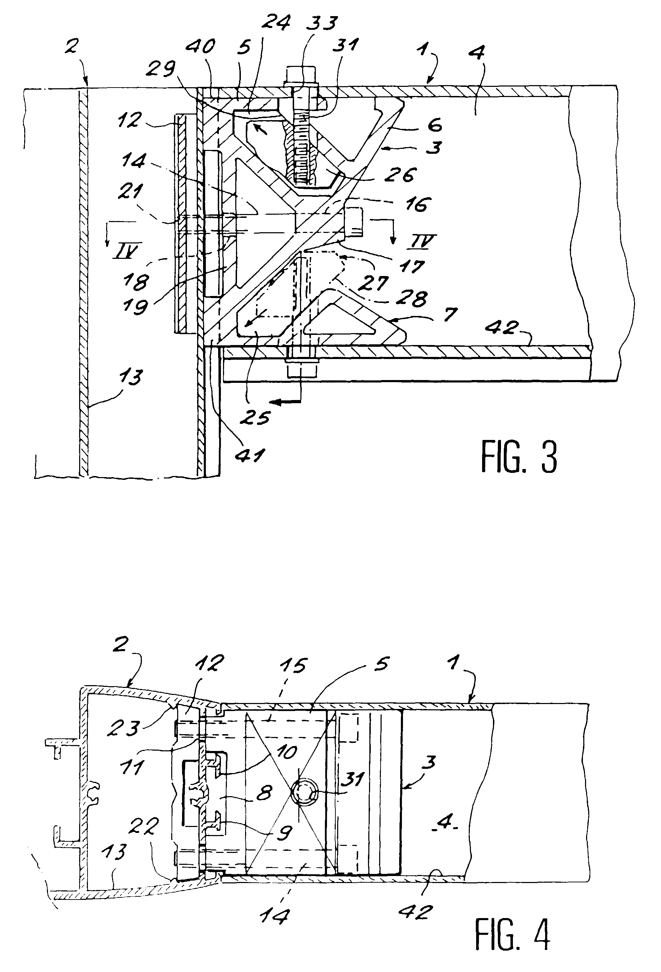

Avantageusement, la contre-plaque 12 est guidée et centrée dans la partie creuse 13 du second profilé 2 au moyen d'ergots 22 et 23, prévus en saillie dans les côtés de ce dernier (voir plus particulièrement la Figure 4).

Le corps 5 de l'embout 3 comporte deux logements 24 et 25, au droit des ailes 6 et 7, à l'intérieur desquels sont disposés deux coulisseaux, respectivement 26 et 27, de formes complémentaires des logements et présentant notamment pour chacun de ces coulisseaux une face inclinée 28 appliquée contre une portée 29 présentant la même inclinaison de l'aile associée 6 ou 7. De préférence, l'inclinaison commune des surface 28 et 29 est choisie égale à 45°, bien que cette orientation ne soit pas en elle-même limitative.

Chacun des deux coulisseaux 26 et 27 comporte un trou taraudé 30, propre à coopérer avec l'extrémité filetée d'une vis de commande, le coulisseau 26 étant ainsi associé avec une vis 31 et le coulisseau 37 avec une vis 32.

Ces vis 31 et 32 traversent chacune librement un large passage, respectivement 33 pour celui qui est prévu dans l'aile 6 du corps 5 et 34 pour celui ménagé dans l'aile 7. Par ailleurs, ces vis s'engagent avec un jeu minimal dans des perçages, respectivement 35 et 36 prévus dans les faces correspondantes du premier profilé 1.

Chaque coulisseau 26 ou 27 est par ailleurs maintenu dans son logement 24 ou 25 au moyen d'un joint 37 dont le talon est ancré dans une rainure 37a prévue dans le coulisseau, ce joint faisant saillie hors du contour apparent de celui-ci de manière à venir en appui contre la surface en regard du logement.

Enfin et conformément à l'invention, l'aile 6 comporte une extrémité 38 propre à venir en contact avec la surface interne du premier profilé 1 sous la commande du coulisseau 26, tandis que l'autre aile 7 comprend un profil 39, fermé sur lui-même et susceptible de se déformer sous l'effet du déplacement relatif de cette aile vis-à-vis de l'autre coulisseau 27.

La mise en oeuvre du dispositif d'assemblage et de bridage décrit ci-dessus est réalisée de la manière suivante.

Dans un premier temps, l'embout 3 est appliqué et bloqué contre la surface du second profilé 2, en étant immobilisé dans la position fixée, notamment par les trous de passage 20 des vis 14 et 15 dans la toile 11 de ce profilé, par solidarisation du corps 5 et de la contre-plaque 12 préalablement introduite dans la partie creuse 13 du profilé derrière les ergots 22 et 23.

On engage alors le premier profilé 1 sur l'embout de telle sorte que le corps 5 s'introduise dans la partie creuse 4 de ce profilé jusqu'à ce que l'extrémité de celui-ci vienne s'appuyer contre la toile 11.

Dans cette position, on introduit la vis de serrage 31 dans le trou 35 du profilé, de telle sorte que cette vis, après traversée du large passage 33 prévue dans l'aile 6 du corps 5, vienne engager son extrémité filetée dans l'alésage taraudé 30 du coulisseau 26 monté dans le logement 24 prévu dans cette aile.

Dans cette situation, la commande de la vis 31 provoque le déplacement progressif du coulisseau 26 dans son logement selon les surfaces inclinées en contact, respectivement 28 et 29, ce mouvement provoquant le rapprochement progressif du premier profilé 1 contre le second profilé 2 et bride celui-ci sur la face supérieure 40 du corps 5, en immobilisant au moins en partie les deux profilés.

Pour parfaire néanmoins ce bridage et accroître la tenue de l'assemblage, on commande alors la seconde vis de serrage 32, disposée sur la face opposée du corps 5, le serrage complémentaire réalisé devant toutefois ne pas générer un système hyperstatique, qui provoquerait le gonflement et la déformation latérale du premier profilé.

C'est la raison pour laquelle, conformément à l'invention, la seconde aile 7 du corps 5 de l'embout 3 comporte un profil fermé 39 qui peut être légèrement déformé par le déplacement du second coulisseau 27 sous l'effet de la vis de serrage 32, laquelle, comme dans le cas de la vis 31, assure le glissement du coulisseau sur les surfaces inclinées 28 et 29.

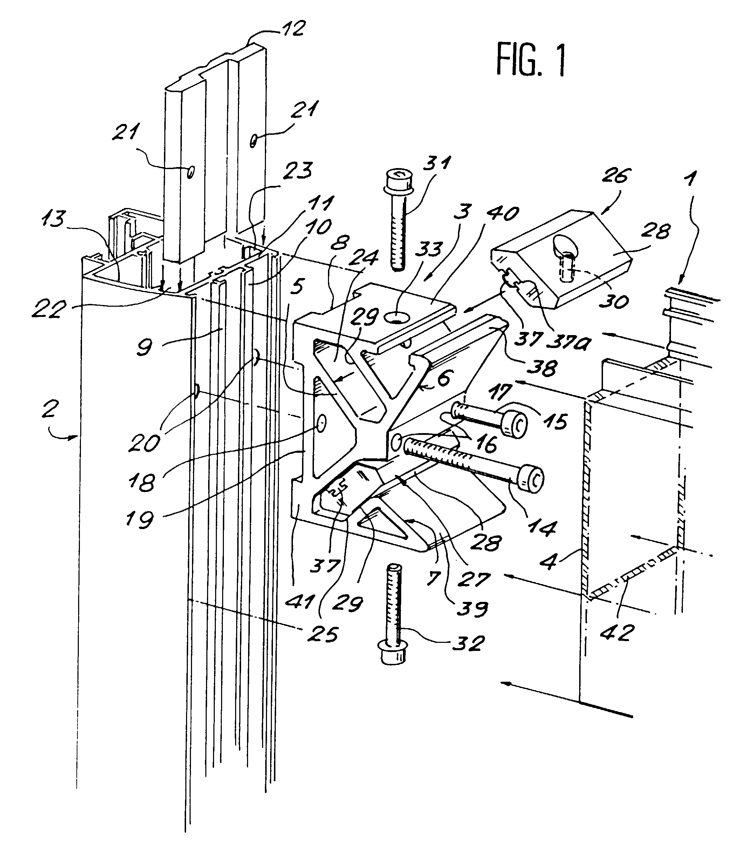

Grâce à ces dispositions, l'aile 7 du corps 5, qui n'est pas parfaitement rigide, subit un pivotement relatif vers l'extérieur autour d'un axe horizontal, schématisé sur les dessins, en particulier sur les Figures 1 et 3 par la référence 41, ce pivotement qui amène l'aile 7 progressivement en contact avec la surface en regard 42 du profilé, permettant le rattrapage parfait des jeux résultant des tolérances de fabrication inéluctables, entre ce profilé 1 et le corps 5.

On réalise ainsi un dispositif d'assemblage qui permet d'assurer à l'aide des deux vis de serrage, d'abord le bridage nécessaire du premier profilé sur le second, puis le rattrapage des jeux liés aux tolérances de fabrication, en améliorant dans une mesure considérable la fiabilité du système qui réalise l'immobilisation des deux profilés d'une façon complète et sûre.

L'ensemble est simple à réaliser et à mettre en oeuvre, n'exigeant que le perçage dans les profilés de quatre trous pour le passage des vis, 14 et 15 d'une part, 31 et 32 d'autre part. Avantageusement, ces vis peuvent être munies d'un frein de filet, en lui-même bien connu dans la technologie de fabrication de telles vis, de manière à éviter que le serrage réalisé ne se dégrade, sous l'effet éventuel de vibrations notamment.

Le dispositif selon l'invention permet avantageusement, par l'utilisation d'une deuxième vis de serrage 32, d'assurer un second point de rapprochement entre les deux profilés 1 et 2.

Bien entendu, il va de soi que l'invention ne se limite pas à l'exemple de réalisation plus spécialement décrit ci-dessus en référence aux dessins annexés ; elle en embrasse au contraire toutes les variantes.

## Revendications

1. Dispositif d'assemblage en équerre et de bridage, entre deux profilés métalliques creux (1, 2), disposé selon deux directions perpendiculaires, du type comportant un embout (3) propre à être logé avec jeu dans le premier (1) des deux profilés et appliqué contre la surface du second profilé (2) pour être solidarisé de celui-ci, notamment au moyen d'une contre-plaque (12) montée à l'intérieur de ce second profilé et d'au moins une vis (14, 15) de liaison avec cette contre-plaque, cet embout coopérant de plus avec un premier coulisseau (26), apte à glisser sur une surface inclinée (29) de l'embout tout en étant solidarisé du premier profilé à l'aide d'une vis de serrage (31), traversant librement un premier passage (33) prévu dans l'embout, de telle sorte que la commande de cette vis provoque le déplacement relatif de cet embout vis-à-vis du premier profilé dans un sens qui assure le blocage des deux profilés l'un contre l'autre, caractérisé en ce que l'embout coopère également avec un second coulisseau (27), solidarisé du premier profilé (1) par une autre vis de serrage (32) traversant librement un second passage (34) prévu dans l'embout, le déplacement relatif de celui-ci par rapport à ce second coulisseau provoquant la déformation progressive d'une aile (7) de l'embout sur laquelle glisse ce coulisseau, rattrapant le jeu dû aux tolérances de montage, créé entre l'embout et le premier profilé.

2. Dispositif selon la revendication 1, caractérisé en ce que les deux vis de serrage (31, 32), provoquant le déplacement relatif des deux coulisseaux (26, 27) par rapport à l'embout (3), sont opposées l'une à l'autre de part et d'autre du premier profilé (1).

3. Dispositif selon l'une des revendications 1 ou 2, caractérisé en ce que les deux coulisseaux (26, 27) sont montés dans des logements (24, 25) symétriques et opposés de l'embout.

4. Dispositif selon la revendication 2, caractérisé en ce que chacun de ces coulisseaux (26, 27) est maintenu dans son logement par un joint (37), monté dans une rainure (37a) du coulisseau et en appui contre la surface en regard de l'embout.

5. Dispositif selon l'une quelconque des revendications 1 0 4, caractérisé en ce que l'embout (3) est solidarisé de la contre-plaque de liaison (12) avec le second profilé (2) au moyen de deux vis (14, 15) symétriques par rapport au plan médian du premier profilé (1), qui s'étendent perpendiculairement à la surface du second.

6. Dispositif selon l'une quelconque des revendications 1 à 5, caractérisé en ce que la contre-plaque de liaison (12) est guidée dans le second profilé (2) contre la surface (11) d'appui de l'embout au moyen d'ergots en saillie (22, 23), prévus dans ce second profilé.

7. Dispositif selon l'une quelconque des revendications 1 à 6, caractérisé en ce que l'embout (3) comporte un corps (5) muni de deux ailes asymétriques (6, 7), l'aile (6), rigide, comportant une extrémité (38) apte à venir au contact de la surface du premier profilé (1) sous l'effet du déplacement relatif du premier coulisseau (26).

## Claims

1. A clamping and corner-joining device between two hollow metal section members (1, 2), disposed in two perpendicular directions,
the device being of the type comprising an insert (3) suitable for being received with clearance in the first (1) of the two section members and for being pressed against the surface of the second section member (2) so as to be secured thereto, in particular by means of a backing plate (12) mounted inside the second section member and by at least one screw (14, 15) connecting with said backing plate, the insert also co-operating with a first slide (26) suitable for sliding on a sloping surface (29) of the insert while being secured to the first section member by means of a clamping screw (31) passing freely through a first passage (33) provided in the insert so that tightening said screw causes the insert to move relative to the first section member in a direction which causes the two section members to be locked together,
the device being characterized in that the insert also co-operates with a second slide (27) secured to the first section member (1) by another clamping screw (32) passing freely through a second passage (34) provided in the insert, the displacement of the second slide relative to the insert progressively deforming a flange (7) of the insert against which the slide slides, thereby eliminating the clearance between the insert and the first section member that is due to assembly tolerances.

2. A device according to claim 1, characterized in that the two clamping screws (31, 32) causing the two slides (26, 27) to move relative to the insert (3) are opposite to each other on either side of the first section member (1).

3. A device according to claim 1 or 2, characterized in that the two slides (26, 27) are mounted in symmetrical and opposite housings (24, 25) of the insert.

4. A device according to claim 2, characterized in that each of the slides (26, 27) is held in its housing by a respective gasket (37) mounted in a groove (37a) of the slide and bearing against the facing surface of the insert.

5. A device according to any one of claims 1 to 4, characterized in that the insert (3) is secured to the backing plate (12) for connection with the second section member (2) by means of two screws (14, 15) disposed symmetrically about the midplane of the first section member (1), which screws extend perpendicularly to the surface of the second section member.

6. A device according to any one of claims 1 to 5, characterized in that the connection backing plate (12) is guided in the second section member (2) against the bearing surface (11) of the insert by means of projecting ridges (22, 23) provided inside said second section member.

7. A device according to any one of claims 1 to 6, characterized in that the insert (3) comprises a body (5) having two asymmetrical flanges (6, 7), the flange (6) being rigid and having an end (38) suitable for coming into contact with the surface of the first section member (1) under the effect of the relative displacement of the first slide (26).

## Patentansprüche

1. Klemm- und Eckverbindungsvorrichtung zwischen zwei rechtwinklig zueinander stehenden Metallhohlprofilen (1,2), des Typs, der ein Ansatzstück (3) aufweist, das geeignet ist, um mit Spiel in dem ersten (1) der zwei Profile aufgenommen zu werden und an die Oberfläche des zweiten Profils (2) angelegt zu werden, um mit diesem kraftschlüssig verbunden zu werden, insbesondere mittels einer im Innern dieses zweiten Profils angebrachten Gegenplatte (12) und mindestens einer Verbindungsschraube (14,15) für eine Verbindung mit dieser Gegenplatte, wobei dieses Ansatzstück ferner mit einer ersten Führung (26) zusammenwirkt, die auf einer geneigten Fläche (29) des Ansatzstücks gleiten kann, wobei sie kraftschlüssig mit dem ersten Profil verbunden wird und zwar mit Hilfe einer Spannschraube (31), die frei durch einen in dem Ansatzstück vorgesehenen ersten Durchgang hindurchgeht, so daß das Drehen dieser Schraube die Verschiebung dieses Ansatzstücks relativ zum ersten Profil in eine Richtung bewirkt, die eine gegenseitige Klemmung der zwei Profile sicherstellt, dadurch gekennzeichnet, daß das Ansatzstück auch mit einer zweiten Führung (27) zusammenwirkt, die mittels einer anderen Spannschraube (32), die frei durch einen in dem Ansatzstück vorgesehenen zweiten Durchgang (34) hindurchgeht, mit dem ersten Profil kraftschlüssig verbunden ist, wobei dessen Verschiebung relativ zu dieser zweiten Führung die allmähliche Verformung eines Flügels (7) des Ansatzstücks bewirkt, auf welchem diese Führung gleitet, wobei das zwischen dem Ansatzstück und dem ersten Profil aufgrund der Fertigungstoleranzen entstandene Spiel nachreguliert wird.

2. Vorrichtung nach Anspruch 1, dadurch gekennzeichnet, daß die zwei Spannschrauben (31,32), die die Verschiebung der zwei Führungen (26,27) relativ zum Ansatzstück (3) bewirken, beiderseits des ersten Profils (1) einander gegenüberliegen.

3. Vorrichtung nach einem der Ansprüche 1 oder 2, dadurch gekennzeichnet, daß die zwei Führungen (26,27) in symmetrischen und gegenüberliegend angeordneten Aufnahmen des Ansatzstücks angebracht sind.

4. Vorrichtung nach Anspruch 2, dadurch gekennzeichnet, daß jede dieser Führungen (26,27) durch eine Halterung (37), die in einer Nut (37a) der Führung angebracht ist und an der Gegenfläche des Ansatzstücks anliegt, in ihrem Gehäuse gehalten wird.

5. Vorrichtung nach einem der Ansprüche 1 bis 4, dadurch gekennzeichnet, daß das Ansatzstück (3) mittels zweier zur Mittelebene des ersten Profils (1) symmetrischer Schrauben (14,15), die sich senkrecht zur Oberfläche des zweiten Profils erstrecken, mit der Verbindungsgegenplatte (12) zur Verbindung mit dem zweiten Profil (2) kraftschlüssig verbunden ist.

6. Vorrichtung nach einem der Ansprüche 1 bis 5, dadurch gekennzeichnet, daß die Verbindungsgegenplatte (12) in dem zweiten Profil (2) an der Ansatzstückanliegefläche (11) mittels vorspringender Nasen (22,23), die in diesem zweiten Profil vorgesehen sind, geführt wird.

7. Vorrichtung nach einem der Ansprüche 1 bis 6, dadurch gekennzeichnet, daß das Ansatzstück (3) einen mit zwei asymmetrischen Flügeln (6,7) versehenen Körper (5) aufweist, wobei der starre Flügel (6) ein Ende (38) aufweist, das unter Einwirkung der relativen Verschiebung der ersten Führung (26) mit der Oberfläche des ersten Profils (1) in Berührung kommt.
